# EUROPEAN PATENT SPECIFICATION

(11) **EP 3 525 052 B1**
(45) Date of publication and mention of the grant of the patent: **29.12.2021**
(21) Application number: 17893759.5
(22) Date of filing: 24.01.2017
(51) Int. Cl.: G05B 19/418

(54) **DATA SYNCHRONIZATION METHOD AND APPARATUS**
VERFAHREN UND VORRICHTUNG ZUR DATENSYNCHRONISATION
PROCÉDÉ ET APPAREIL DE SYNCHRONISATION DE DONNÉES

(43) Date of publication of application: 14.08.2019
(73) Proprietor: China Techenergy Co., Ltd, Beijing 100094 (CN); China General Nuclear Power Corporation (CGN), Shenzhen, Guangdong 518027 (CN)
(72) Inventor: JIANG, Guojin, Beijing 100094 (CN); SUN, Na, Beijing 100094 (CN); SHI, Guilian, Beijing 100094 (CN); ZHU, Liling, Beijing 100094 (CN); XIE, Yiqin, Beijing 100094 (CN); LI, Gang, Beijing 100094 (CN); LIU, Song, Beijing 100094 (CN); ZUO, Xin, Beijing 100094 (CN); QI, Min, Beijing 100094 (CN)
(74) Representative: Germain Maureau
(86) International application number: PCT/CN2017/072493
(87) International publication number: WO 2018/137145

(56) References cited:
- CN-A- 102 323 794
- CN-A- 102 523 128
- CN-A- 104 376 088
- US-A1- 2011 264 244
- US-A1- 2015 378 356

## Description

### Technical Field

The invention relates to a technology, in particular to a method and device for data synchronization.

### Background Art

Distributed Control System (DCS) is a new type of control system which integrates control technology, computer technology, communication technology and network technology. It is used for decentralized control and centralized management, and specifically control tasks of a complex industrial process decentralized to several control stations to be accomplished. The protection system of a nuclear power plant realized by a distributed control system is one of the most important systems, and it is a powerful guarantee of stable, safe and reliable operation of a reactor. The protection system may be implemented via an analog technology or a digital technology.

When data inconsistency occurs between two control stations, the problem of data synchronization between the control stations is usually solved in the following two ways. Firstly, the equipment is manually adjusted to achieve data synchronization; and secondly, an alarming is reported when the data is inconsistent, and when one control station is restarted, the data therein is automatically synchronized with the data in the other control station by means of communication between the two control stations.

However, both of the methods have the following disadvantages: firstly, the first method is complex in operation and large in error, and may bring risks to the execution of system security functions; secondly, the second method requires a restart of the control station, thereby affecting the availability of the system. In addition, due to the means of communication between the control stations, the operation reliability of the system is thus affected to a certain extent.

US 2015/378356A1 provides respective technical solutions; however, the above mentioned problem still remains unsolved.

### Summary of the Invention

The object of the present invention is to provide a method and device for data synchronization such that the data can be accurately and reliably synchronized to a faulted control station; the operation is simple; and the security and the availability of a distributed control system are guaranteed.

The invention is defined by the independent claims. Additional features of the invention are provided in the dependent claims.

According to an aspect of the present invention, a data synchronization method is provided. The method comprises the following steps of: after failure recovery of any one of the control stations, locking the output of the faulted control station in a distributed control system of a nuclear power plant to enable the faulted control station to be in a bypass state; comparing the variable of the faulted control station with the variable of a selected normally functioning control station to determine data to be synchronized; establishing a data transmission channel with the faulted control station, and performing data synchronization on the data to be synchronized based on the established data transmission channel.

Preferably, comparing the variable of the faulted control station with the variable of the selected normally functioning control station to determine the data to be synchronized comprises:
acquiring the online value of a first variable of at least one variable of the normally functioning control station and the online value of a second variable of a corresponding variable of the faulted control station; and
determining the data to be synchronized by comparing the online value of a first variable of each at least one variable of the normally functioning control station with the online value of a second variable of a corresponding variable of the faulted control station.

Preferably, acquiring the online value of a first variable of at least one variable of the normally functioning control station and the online value of a second variable of a corresponding variable of the faulted control station comprises:
acquiring the online value of a first variable of each variable of a normally functioning control station in a variable comparison list aiming at the variable needed to be compared and the online value of a second variable of the corresponding variable of a faulted control station in the variable comparison list according to the variable comparison list.

Preferably, after the data transmission channel is established between the faulted control station and the engineer station, data synchronization on the data to be synchronized being performed, which further comprises:
disconnecting the data transmission channel and cancelling the bypass state the faulted control station is in.

Preferably, the method further comprises:
acquiring the variable information of each of the plurality of control stations, and establishing the variable comparison list according to the acquired variable information.

Preferably, the variable information comprises at least one of the following: a data name, a data type and an online value.

Preferably, after the fault recovery of any one of the control stations and before bypassing the faulted control station in the distributed control system of the nuclear power plant, which further comprises:
carrying out variable definition on the data needed to be synchronized of each of the plurality of control stations.

Preferably, the data needed to be synchronized comprises at least one of the following logically transmitted data: an RS flip-flop, a Z flip-flop, a self-holding logic and a delayer.

According to another aspect of the present invention, a data synchronization device is provided. The device comprises: a control station locking module used for locking the output of a faulted control station in the distributed control system of a nuclear power plant after failure recovery of any one of the control stations, so that the faulted control station is in a bypass state; variable comparison module used for comparing the variable of the faulted control station with the variable of the selected normally functioning control station to determine the data to be synchronized; channel establishing and data synchronizing module used for establishing a data transmission channel with the faulted control station and performing data synchronization on the data to be synchronized based on the established data transmission channel.

Preferably, the variable comparison module comprises:
a variable online value acquisition unit used for acquiring the online value of a first variable of at least one variable of the normally functioning control station and the online value of a second variable of a corresponding variable of the faulted control station;
and a synchronization data determining unit used for determining the data to be synchronized by comparing the online value of a first variable of each at least one variable of the normally functioning control station with the online value of a second variable of a corresponding variable of the faulted control station.

Preferably, the variable online value acquisition unit is operable to acquire the online value of a first variable of each variable of a normally functioning control station in a variable comparison list aiming at the variable needed to be compared and the online value of a second variable of the corresponding variable of the faulted control station in the variable comparison list according to a variable comparison list.

Preferably, the device further comprises: channel disconnecting and bypass cancelling module used for disconnecting the data transmission channel and cancelling the bypass state the faulted control station is in.

Preferably, the device further comprises: list establishing module used for acquiring the variable information of each of the plurality of control stations and establishing the variable comparison list according to the acquired variable information.

Preferably, the variable information comprises at least one of the following: a data name, a data type and an online value.

Preferably, the device further comprises: variable definition module used for carrying out variable definition on data needed to be synchronized of each of the plurality of control stations.

Preferably, the data needed to be synchronized comprises at least one of the following logically transmitted data: an RS flip-flop, a Z flip-flop, a self-holding logic and a delayer.

According to the data synchronization method and device provided by the embodiment of the invention, after failure recovery is carried out in any one of the control stations, the output of the faulted control station is locked so that the faulted control station is in a bypass state; further, comparing the variable of the faulted control station with the variable of the selected normally functioning control station to determine data to be synchronized; and performing data synchronization on the data to be synchronized based on the data transmission channel established with the faulted control station. Therefore, data can be accurately and reliably synchronized to a faulted control station; the operation is simple; and the security and availability of the distributed control system are guaranteed.

### Brief Description of the Drawings

FIG. 1 is a flowchart illustrating a data synchronization method according to Embodiment 1 of the present invention;
FIG. 2 is a flowchart illustrating a data synchronization method according to Embodiment 2 of the present invention;
FIG. 3 is a logic block diagram illustrating a data synchronization device according to Embodiment 3 of the present invention;
FIG. 4 is logic block diagram illustrating a data synchronization device according to Embodiment 4 of the present invention.

### Detailed Description of the Invention

Preferred embodiments of the present invention will be further illustrated in detail in conjunction with the accompanying drawings, wherein like reference numerals refer to the elements throughout several drawings and embodiments. The following embodiments are intended to illustrate the invention and are not intended to limit the scope thereof.

It will be understood by those skilled in the art that terms "first", "second" and the like in the present invention are used solely to distinguish different steps, devices, modules, and the like and do not denote any particular technical meaning or essential logical order therebetween.

### Embodiment 1

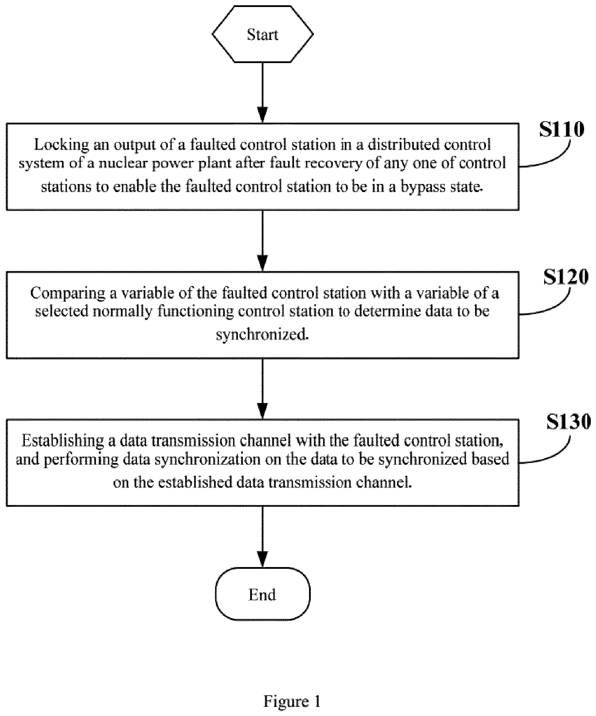

FIG. 1 is a flowchart illustrating a data synchronization method according to Embodiment 1 of the present invention. The method may be performed on equipment such as a maintenance engineer station. The data synchronization method is used for a distributed control system of a nuclear power plant, wherein the distributed control system of the nuclear power plant comprises a plurality of control stations configured to be parallel redundancy.

Referring to FIG. 1, in step S110, after failure recovery of any one of the control stations, the output of a faulted control station in the distributed control system of the nuclear power plant is locked so that the faulted control station is in a bypass state.

Specifically, after the faulted control station restarts its system, the faulted control station is bypassed, that is to say, the output of the entire control station is locked, i.e., no output is performed.

In step S120, the variables of the faulted control station are compared with the variables of the selected normally functioning control station to determine the data to be synchronized.

In a specific implementation, a process of establishing a variable comparison list is generally completed in a factory, and variable monitoring is carried out on two parallel redundancy control stations (namely, a faulted control station and a normally functioning control station) according to the established variable comparison list, and a variable comparison result is obtained to provide a data basis for a subsequent data synchronization step.

In step S130, a data transmission channel is established with the faulted control station, and data synchronization is performed on data to be synchronized based on the established data transmission channel.

In practice, the maintenance engineer station simultaneously connects the normally functioning control station via secure bus, data transfer station, and a gateway in order to obtain the data for variables of the normally functioning control station and synchronize the data to the faulted control station.

In addition, the connection between the maintenance engineer station and the control station can realize data interaction by other communication media or communication protocols according to the characteristics of the platform, and will not be particularly defined in this embodiment.

According to the data synchronization method provided by the embodiment of the invention, after failure recovery is carried out in any one of the control stations, the output of the faulted control station is locked so that the faulted control station is in a bypass state; further, comparing the variable of the faulted control station with the variable of the selected normally functioning control station to determine data to be synchronized; and performing data synchronization on the data to be synchronized based on the data transmission channel established with the faulted control station. Therefore, data can be accurately and reliably synchronized to a faulted control station; the operation is simple; and the security and availability of the distributed control system are guaranteed. In addition, means of communication are not needed among control stations, thereby the operation reliability of the distributed control system being further improved.

### Embodiment 2

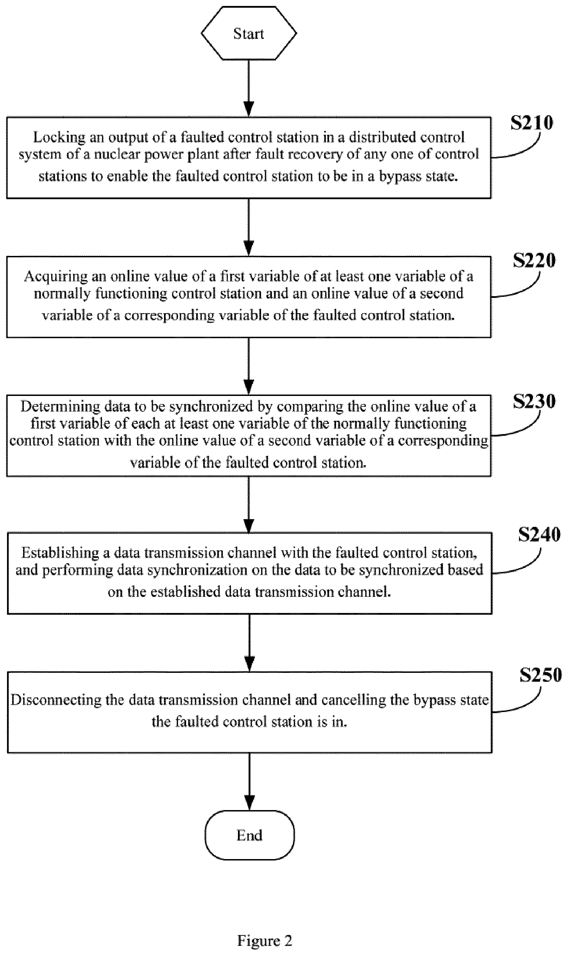

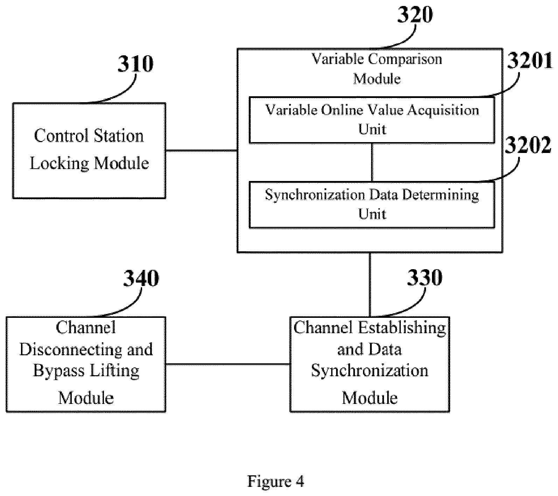

FIG. 2 is a flowchart illustrating a data synchronization method according to Embodiment 2 of the present invention. Embodiment 2 may be considered as yet another specific implementation of FIG. 1. The method may be performed by a data synchronization device as shown in FIG. 4.

Referring to FIG. 2, in step S210, after failure recovery of any one of the control stations, the output of a faulted control station in a distributed control system of a nuclear power plant is locked so that the faulted control station is in a bypass state.

Wherein, the content of the above step S210 is the same as that of the above step S110 in Embodiment 1, and thus will not be described in detail.

According to an alternative embodiment of the present invention, before step S210, the data synchronization method further comprises: defining the variable of the data needed to be synchronized of each of a plurality of control stations.

It is noted that data needed to be synchronized comprises at least one of the following logically transmitted data but is not limited thereto: an RS flip-flop, a Z flip-flop, a self-holding logic, and a delayer.

The process of the above variable defining is usually done in a factory. Defining a variable means the configuration definition of the data to be synchronized and monitored in the control station, that is, the application of logic configuration of control stations. The data needed to be synchronized and monitored is the data that runs within the control station, that is, the data that runs at the input end and the output end of the software logic (such as the afore mentioned RS flip-flop) in the control station. The application of software logic in the control station is used for realizing the control or protection function of the nuclear power station. Wherein, with regard to the data need to be monitored, i.e. the data at the output end of the an RS flip-flop, a Z flip-flop, a self-holding logic or delay logic, the purpose of monitoring the data is to determine whether two control stations are consistent or not, and if not, data synchronization operation needs to be performed. The data needed to be synchronized is the input end of the above logic, and the purpose of outputting consistent data is achieved through a method of synchronizing (e.g. compulsory means, i.e. assigning values) the input end.

An example of RS flip-flop logic is described below. Firstly, when a parallel redundancy control station is configured, the R end and the S end of the RS flip-flop are respectively made an OR logic with the configuration definition points INI and IN2; secondly, the results of the output end of the two control stations are read and compared, and if they are inconsistent, a synchronization is needed; and what's more, depending on the output value of the normally functioning control station, the input point INI or IN2 of the faulted control station is forced, i.e. IN1 and IN2 are assigned values, so that the outputs of the two control stations coincide. For example, IN1 and IN2 are assigned a value of 0 or 1. Wherein, the specific compulsory value can be realized through the configuration file of the redundant synchronization tool according to the output result of the normally functioning control station. Finally, the enforcement of the faulted control station is removed.

In step S220, the online value of a first variable of at least one variable of the normally functioning control station and the online value of a second variable of a corresponding variable of the faulted control station are obtained.

According to an exemplary embodiment of the present invention, step S220 may include: acquiring the online value of a first variable of each variable of a normally functioning control station in a variable comparison list aiming at the variable needed to be compared and the online value of a second variable of the corresponding variable of the faulted control station in the variable comparison list according to the variable comparison list.

In practice, the process of establishing the above variable comparison list is usually done in a factory. Correspondingly, the data synchronization method can further comprise: acquiring respective variable information of a plurality of control stations, and establishing a variable comparison list according to the acquired variable information.

The variable information herein may include, but is not limited to, at least one of the following: a data name, a data type and an online value.

In step S230, the data to be synchronized is determined by comparing the online value of the first variable of each at least one variable of the normally functioning control station with the online value of the second variable of the corresponding variable of the faulted control station.

In step S240, a data transmission channel is established with the faulted control station, and data synchronization is performed on the data to be synchronized based on the established data transmission channel.

Wherein, the content of the above step S240 is the same as that of the above step S130 in Embodiment 1, and thus will not be described in detail.

In step S250, the data transmission channel is disconnected, and the bypass state the faulted control station is in is lifted.

Specific applications of the embodiment of the present invention are further intuitively described below in conjunction with specific process examples.

Assume that the faulted control station is a target station and the normally functioning control station is a reference station. After the target station is bypassed, the target station is in communication with a maintenance engineer station, wherein the maintenance engineer station is provided with a redundant synchronization tool, and the work flow of the redundant synchronization tool is the method flow for implementing the embodiment. A field maintenance engineer logs in, inputs a project file path, a user name and a password, and analyzes the project file after user permission information is found to be correct in the database. When the analysis is correct, the system running on the maintenance engineer station returns to all control stations. The field maintenance engineer selects a reference station and a target station, and the system will load the variable information of the reference station and the target station respectively, and display the online values of the variables on an interface. Based on the respective variable information of the reference station and the target station, the variables to be compared are selected from the reference station and the target station to establish a variable comparison list, which is exemplified in Table 1 as below.

**Table 1**

| Serial Number | The Variable In The Reference Station | Data Type | Online Value | The Variable In The Target Station | Data Type | Online Value | Allowable Error | Comparison Result |
|---|---|---|---|---|---|---|---|---|
| 1 | HZRIS09 9MD | real_ signal | | HZARE0 58MN2 | real_ signal | | | |
| 2 | HZRPR3 19KS | bool _ signal | | HP1355C E7 | Bool_ signal | | | |

Referring to Table 1, the variable in the variable comparison list is the above mentioned data needed to be monitored (i.e., the data at the output end of the logic), and each variable is named, such as: HZRIS099MD. The field maintenance engineer can click the "Start Monitoring" button on the system interface of the maintenance engineer station, and the two control stations enter the monitoring state at the same time, and the online values of the variables needed to be compared in the variable comparison list are displayed. At this point, the "Data Synchronization Button" is clicked to synchronize the inconsistent portions of the comparison result according to the logic configured in the algorithm block configuration file until all inconsistent portions are synchronized. If the "Stop Monitoring" button is clicked, both the reference station and the target station end the communication with the redundant synchronization tool.

The data synchronization method provided by the embodiment of the invention also has the following technical effects on the basis of the above mentioned embodiment:
on one hand, the data to be synchronized is accurately determined by establishing a variable comparison list and acquiring the online value of a variable of a normally functioning control station and the online value of a variable of a corresponding variable of a faulted control station according to the variable comparison list;
on the other hand, in the embodiment, the data transmission channel is disconnected after data synchronization, and the bypass state of the faulted control station is lifted, so that the normal operation that the faulted control station restores is guaranteed;
what's more, variable definition is carried out on data needed to be synchronized of each of a plurality of control stations before data synchronization, so that a technical basis is provided for subsequent data synchronization steps; and
moreover, a data transmission channel is established only with the faulted control station instead of establishing a direct connection with the normally functioning control station, so that the safe operation of the control station is guaranteed.

### Embodiment 3

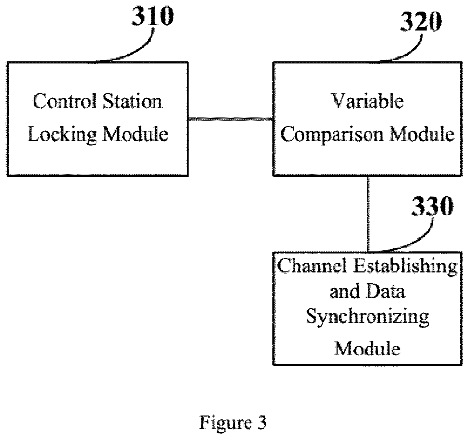

Based on the same technical concept, FIG. 3 is a logic block diagram illustrating a data synchronization device according to Embodiment 3 of the present invention. It can be used for performing the data synchronization method flow as described in Embodiment 1.

Referring to FIG. 3, the data synchronization device is used for a distributed control system of a nuclear power plant comprising a plurality of control stations configured for parallel redundancy. The data synchronization device comprises: a control station locking module 310, a variable comparison module 320, a channel establishing and a data synchronization module 330.

The control station locking module 310 is used for locking the output of a faulted control station in the distributed control system of a nuclear power plant after failure recovery of any one of the control stations, so that the faulted control station is in a bypass state.

The variable comparison module 320 is used for comparing the variable of the faulted control station with the variable of a selected normally functioning control station to determine the data to be synchronized.

The channel establishing and data synchronizing module 330 is used for establishing a data transmission channel with the faulted control station and performing data synchronization on the data to be synchronized based on the established data transmission channel.

The data synchronization device provided by the embodiment of the invention locks the output of the faulted control station after failure recovery of any one of the control stations, so that the faulted control station is in a bypass state; the variable of the faulted control station is further compared with the variable of the selected normally functioning control station to determine data to be synchronized; and data synchronization is performed on data to be synchronized based on the data transmission channel established with the faulted control station. Therefore, data can be accurately and reliably synchronized to a faulted control station; the operation is simple; and the security and availability of the distributed control system are guaranteed. In addition, means of communication are not needed among control stations, thereby the operation reliability of the distributed control system being further improved.

### Embodiment 4

Based on the same technical concept, FIG. 4 is a logic block diagram illustrating a data synchronization device according to Embodiment 4 of the present invention. It can be used for performing the data synchronization method flow as described in Embodiment 2.

Referring to FIG. 4, specifically, the variable comparison module 320 may include as follows:
a variable online value acquisition unit 3201 used for acquiring the online value of a first variable of at least one variable of a normally functioning control station and the online value of a second variable of a corresponding variable of a faulted control station.
a synchronization data determining unit 3202 determining data to be synchronized by comparing the online value of a first variable of each at least one variable of the normally functioning control station with the online value of a second variable of a corresponding variable of the faulted control station.

Wherein, the variable online value acquisition unit 3201 may be specifically configured to acquire the online value of a first variable of each variable of normally functioning control station in a variable comparison list aiming at the variable needed to be compared and the online value of a second variable of the corresponding variable of the faulted control station in the variable comparison list according to a variable comparison list.

Further, the data synchronization device may further include: a channel disconnecting and bypass cancelling module 340 used to disconnect the data transmission channel and lift the bypass state the faulted control station is in.

Optionally, the data synchronization device further comprises: a list establishing module (not shown in the figure) used for acquiring the variable information of each of a plurality of control stations and establishing a variable comparison list according to the acquired variable information.

Preferably, the variable information may include, but is not limited to, at least one of the following: a data name, a data type and an online value.

Further, the data synchronization device further comprises: a variable definition module (not shown) used for carrying out variable definition on data needed to be synchronized of each of a plurality of control stations.

Here, the data needed to be synchronized may include at least one of the following logically transmitted data but is not limited thereto: an RS flip-flop, a Z flip-flop, a self-holding logic, and a delayer

The data synchronization device provided by the embodiment of the invention has the following technical effects on the basis of the above mentioned embodiment: firstly, the data to be synchronized is accurately determined by establishing a variable comparison list and acquiring the online value of a variable of a normally functioning control station and the online value of a variable of a corresponding variable of the faulted control station according to the variable comparison list; secondly, in the embodiment, the data transmission channel is disconnected after data synchronization, and the bypass state of the faulted control station is lifted, so that the normal operation that the faulted control station restores is guaranteed; and thirdly, variable definition is carried out on data needed to be synchronized of each of a plurality of control stations before data synchronization, so that a technical basis is provided for subsequent data synchronization steps.

It is to be noted that each of the steps/components described in this application may be separated into further steps/more components, or two or more steps/components or portions of the operation of the steps/components may be combined into new steps/components, as required by the embodiments, to achieve the objects of the present invention.

The above-described method according to the present invention may be implemented in hardware or firmware, or as software or a computer code storable in a recording medium such as a CD ROM, RAM, floppy disk, hard disk or magneto-optical disk, or as a computer code downloaded over a network and originally stored in a remote recording medium or a non-transitory machine-readable medium and to be stored in a local recording medium, such that the method described herein may thus be stored in such software processes on a recording medium using a general purpose computer, an application specific processor, or a programmable or special purpose hardware such as an ASIC or FPGA. It is to be understood that a computer, a processor, a microprocessor controller, or a programmable hardware comprises a storage component (e.g., RAM, ROM, flash memory, etc.) that can store or receive software or computer code such that, when accessed and executed by a computer, a processor, or a hardware, the software or the computer code implements the processing methods described herein. Further, when the general purpose computer accesses a code for implementing the processes illustrated herein, the execution of the code translates the general purpose computer into an application specific computer for performing the processes illustrated herein.

While the above description is only an illustration of preferred embodiments of the present invention, the scope of the present invention is not limited thereto. Variations or substitutions are readily conceivable within the technical scope disclosed in the present invention by those skilled in the art and are thus within the scope of the present invention. Therefore, the scope of the invention should be determined by the scope defined by the appended claims.

## Claims

1. A data synchronization method for a distributed control system of a nuclear power plant, the method comprising:
after failure recovery of any one of the control stations, locking an output of a faulted control station in the distributed control system of the nuclear power plant to enable the faulted control station to be in a bypass state, wherein the distributed control system of the nuclear power plant comprises a plurality of control stations configured for parallel redundancy (S110); and the method being **characterized in** further comprising:
comparing a variable of the faulted control station with a variable of a selected normally functioning control station to determine data to be synchronized (S 120); and establishing a data transmission channel with the faulted control station, and performing data synchronization on data to be synchronized based on the established data transmission channel (S 130);
comparing the variable of the faulted control station with the variable of the selected normally functioning control station to determine data to be synchronized comprises:
acquiring an online value of a first variable of at least one variable of the normally functioning control station and an online value of a second variable of a corresponding variable of the faulted control station; and
determining the data to be synchronized by comparing the online value of a first variable of the each at least one variable of the normally functioning control station with the online value of a second variable of a corresponding variable of the faulted control station.

2. The method according to claim 1, **characterized in that** the acquiring the online value of a first variable of at least one variable of the normally functioning control station and the online value of a second variable of a corresponding variable of the faulted control station comprises:
acquiring the online value of a first variable of each variable of the normally functioning control station in a variable comparison list aiming at a variable needed to be compared and the online value of a second variable of a corresponding variable of the faulted control station in the variable comparison list according to a variable comparison list.

3. The method according to claim 1, **characterized in that**, after data synchronization on the data to be synchronized is performed on the data transmission channel established between the faulted control station and an engineer station, the method further comprises:
disconnecting the data transmission channel and cancelling the bypass state the faulted control station is in.

4. The method according to claim 2, **characterized in that**, the method further comprises:
acquiring variable information of each of the plurality of control stations, and establishing the variable comparison list according to the acquired variable information.

5. The method according to claim 4, **characterized in that**, the variable information comprises at least one of the following: a data name, a data type and an online value.

6. The method according to any one of claims 1-5, **characterized in that**, after fault recovery of any one of the control stations and before bypassing a faulted control station in a distributed control system of a nuclear power plant, the method further comprises:
carrying out variable definition on data needed to be synchronized of each of the plurality of control stations.

7. The method according to claim 6, **characterized in that** the data needed to be synchronized comprises at least one of the following logically transmitted data: an RS flip-flop, a Z flip-flop, a self-holding logic and a delayer.

8. A data synchronization device for a distributed control system of a nuclear power plant, the device comprising:
a control station locking module (310) used for locking an output of a faulted control station in a distributed control system of the nuclear power plant after failure recovery of any one of the control stations, so that the faulted control station is in a bypass state, wherein the distributed control system of the nuclear power plant comprises a plurality of control stations configured for parallel redundancy; and the device being **characterized in** further comprising: Z
a variable comparison module (320) used for comparing a variable of a faulted control station with a variable of a selected normally functioning control station to determine data to be synchronized; and
a channel establishing and data synchronizing module (330) used for establishing a data transmission channel with the faulted control station and performing data synchronization on the data to be synchronized based on the established data transmission channel;
the variable comparison module comprises:
a variable online value acquisition unit used for acquiring an online value of a first variable of at least one variable of the normally functioning control station and an online value of a second variable of a corresponding variable of the faulted control station; and
a synchronization data determining unit used for determining the data to be synchronized by comparing the online value of a first variable of the each at least one variable of the normally functioning control station with the online value of a second variable of a corresponding variable of the faulted control station.

9. The device according to claim 8, **characterized in that** the variable online value acquisition unit is operable to acquire the online value of a first variable of each variable of the normally functioning control station in a variable comparison list aiming at a variable needed to be compared and the online value of a second variable of a corresponding variable of the faulted control station in the variable comparison list according to a variable comparison list.

10. The device according to claim 8, **characterized in that** the device further comprises:
a channel disconnecting and bypass cancelling module used for disconnecting the data transmission channel and cancelling a bypass state the faulted control station is in.

11. The device according to claim 9, **characterized in that**, the device further comprises:
a list establishing module used for acquiring variable information of each of the plurality of control stations and establishing the variable comparison list according to the acquired variable information.

12. The device according to claim 11, **characterized in that** the variable information comprises at least one of the following: a data name, a data type and an online value.

13. The device according to any one of claims 8-12, **characterized in that**, the device further comprises:
a variable definition module used for carrying out variable definition on data needed to be synchronized of each of the plurality of control stations.

14. The device according to claim 8, **characterized in that** the data needed to be synchronized comprises at least one of the following logically transmitted data: an RS flip-flop, a Z flip-flop, a self-holding logic and a delayer.

## Patentansprüche

1. Datensynchronisationsverfahren für ein Prozessleitsystem eines Kernkraftwerks, wobei das Verfahren umfasst:
nach der Wiederherstellung einer Störung einer der Kontrollstationen, Sperren einer Ausgabe einer fehlerhaften Kontrollstation im Prozessleitsystem des Kernkraftwerks, um zu ermöglichen, dass die fehlerhafte Kontrollstation in einem Bypass-Zustand ist, wobei das Prozessleitsystem des Kernkraftwerks eine Vielzahl von Kontrollstationen umfasst, die für parallele Redundanz (S110) konfiguriert sind; und das Verfahren **dadurch gekennzeichnet ist, dass** es ferner umfasst:
Vergleichen einer Variable der fehlerhaften Kontrollstation mit einer Variable einer ausgewählten normal funktionierenden Kontrollstation, um die zu synchronisierenden Daten zu bestimmen (S120); und Bestimmen eines Datenübertragungskanals mit der fehlerhaften Kontrollstation und Durchführen einer Datensynchronisation an zu synchronisierenden Daten basierend auf dem erstellten Datenübertragungskanal (S130);
Vergleichen der Variable der fehlerhaften Kontrollstation mit der Variable der ausgewählten normal funktionierenden Kontrollstation, um die zu synchronisierenden Daten zu bestimmen, umfassend:
Erfassen eines Online-Werts einer ersten Variable mindestens einer Variable der normal funktionierenden Kontrollstation und eines Online-Werts einer zweiten Variable einer entsprechenden Variable der fehlerhaften Kontrollstation; und
Bestimmen der zu synchronisierenden Daten durch Vergleichen des Online-Werts einer ersten Variable jeder der mindestens einen Variable der normal funktionierenden Kontrollstation mit dem Online-Wert einer zweiten Variable einer entsprechenden Variable der fehlerhaften Kontrollstation.

2. Verfahren nach Anspruch 1, **dadurch gekennzeichnet, dass** das Erfassen des Online-Werts einer ersten Variable mindestens einer Variable der normal funktionierenden Kontrollstation und des Online-Werts einer zweiten Variable einer entsprechenden Variable der fehlerhaften Kontrollstation umfasst:
Erfassen des Online-Werts einer ersten Variable jeder Variable der normal funktionierenden Kontrollstation in einer Variablenvergleichsliste mit dem Ziel einer zu vergleichenden Variable und des Online-Werts einer zweiten Variable einer entsprechenden Variable der fehlerhaften Kontrollstation in der Variablenvergleichsliste gemäß einer Variablenvergleichsliste.

3. Verfahren nach Anspruch 1, **dadurch gekennzeichnet, dass**, nachdem eine Datensynchronisation der zu synchronisierenden Daten auf dem zwischen der fehlerhaften Kontrollstation und einer Technikerstation erstellten Datenübertragungskanal durchgeführt wurde, das Verfahren ferner umfasst:
Abtrennen des Datenübertragungskanals und Aufheben des Bypass-Zustands, in dem sich die fehlerhafte Kontrollstation befindet.

4. Verfahren nach Anspruch 2, **dadurch gekennzeichnet, dass** das Verfahren ferner umfasst:
Erfassen von Variableninformationen von jeder der Vielzahl von Kontrollstationen und Erstellen der Variablenvergleichsliste gemäß den erfassten Variableninformationen.

5. Verfahren nach Anspruch 4, **dadurch gekennzeichnet, dass** die Variableninformationen mindestens eine der folgenden umfassen: einen Datennamen, einen Datentyp und einen Online-Wert.

6. Verfahren nach einem der Ansprüche 1 bis 5, **dadurch gekennzeichnet, dass** das Verfahren nach der Fehlerbehebung einer der Kontrollstationen und vor dem Überbrücken einer fehlerhaften Kontrollstation in einem Prozessleitsystem eines Kernkraftwerks ferner umfasst:
Ausführen einer Variablendefinition an Daten, die synchronisiert werden müssen, von jeder der Vielzahl von Kontrollstationen.

7. Verfahren nach Anspruch 6, **dadurch gekennzeichnet, dass** die zu synchronisierenden Daten mindestens eine der folgenden logisch übertragenen Daten umfassen: einen RS-Flip-Flop, einen Z-Flip-Flop, eine Selbsthaltelogik und einen Verzögerer.

8. Datensynchronisationsvorrichtung für ein Prozessleitsystem eines Kernkraftwerks, wobei die Vorrichtung umfasst:
ein Kontrollstation-Sperrmodul (310), verwendet, zum Sperren einer Ausgabe einer fehlerhaften Kontrollstation im Prozessleitsystem des Kernkraftwerks nach der Wiederherstellung einer Störung einer der Kontrollstationen, so dass die fehlerhafte Kontrollstation in einem Bypass-Zustand ist, wobei das Prozessleitsystem des Kernkraftwerks eine Vielzahl von Kontrollstationen umfasst, die für parallele Redundanz konfiguriert sind; und das Verfahren **dadurch gekennzeichnet ist, dass** es ferner umfasst:
ein Variablenvergleichsmodul (320), verwendet, zum Vergleichen einer Variable einer fehlerhaften Kontrollstation mit einer Variable einer ausgewählten normal funktionierenden Kontrollstation, um die zu synchronisierenden Daten zu bestimmen; und
ein Kanalerstellungs- und Datensynchronisierungsmodul (330), verwendet, zum Erstellen eines Datenübertragungskanals mit der fehlerhaften Kontrollstation und zum Durchführen einer Datensynchronisation an den zu synchronisierenden Daten, basierend auf dem erstellten Datenübertragungskanal;
das Variablenvergleichsmodul umfasst:
eine Variablen-Online-Wert-Erfassungseinheit, verwendet, um einen Online-Wert einer ersten Variable von mindestens einer Variable der normal funktionierenden Kontrollstation und einen Online-Wert einer zweiten Variable einer entsprechenden Variable der fehlerhaften Kontrollstation zu erfassen; und
eine Synchronisationsdaten-Bestimmungseinheit, verwendet, zum Bestimmen der zu synchronisierenden Daten, indem der Online-Wert einer ersten Variable der jeweils mindestens einen Variable der normal funktionierenden Kontrollstation mit dem Online-Wert einer zweiten Variable einer entsprechenden Variable der fehlerhaften Kontrollstation verglichen wird.

9. Vorrichtung nach Anspruch 8, **dadurch gekennzeichnet, dass** die Variablen-Online-Wert-Erfassungseinheit betreibbar ist, um den Online-Wert einer ersten Variable jeder Variable der normal funktionierenden Kontrollstation in einer Variablenvergleichsliste zu erfassen mit dem Ziel einer zu vergleichenden Variable und des Online-Werts einer zweiten Variable einer entsprechenden Variable der fehlerhaften Kontrollstation in der Variablenvergleichsliste gemäß einer Variablenvergleichsliste.

10. Vorrichtung nach Anspruch 8, **dadurch gekennzeichnet, dass** die Vorrichtung ferner umfasst:
ein Kanalabtrenn- und Überbrückungsaufhebungsmodul, verwendet, zum Abtrennen des Datenübertragungskanals und zum Aufheben eines Bypass-Zustands, in dem sich die fehlerhafte Kontrollstation befindet.

11. Vorrichtung nach Anspruch 9, **dadurch gekennzeichnet, dass** die Vorrichtung ferner umfasst:
ein Listenerstellungsmodul, verwendet, zum Erfassen von Variableninformationen von jeder der Vielzahl von Kontrollstationen und zum Erstellen der Variablenvergleichsliste gemäß den erfassten Variableninformationen.

12. Vorrichtung nach Anspruch 11, **dadurch gekennzeichnet, dass** die Variableninformationen mindestens eine der folgenden umfassen: einen Datennamen, einen Datentyp und einen Online-Wert.

13. Vorrichtung nach einem der Ansprüche 8 bis 12, **dadurch gekennzeichnet, dass** die Vorrichtung ferner umfasst:
ein Variablendefinitionsmodul, verwendet, zum Ausführen einer Variablendefinition an Daten, die synchronisiert werden müssen, von jeder der Vielzahl von Kontrollstationen.

14. Vorrichtung nach Anspruch 8, **dadurch gekennzeichnet, dass** die zu synchronisierenden Daten mindestens eine der folgenden logisch übertragenen Daten umfassen: einen RS-Flip-Flop, einen Z-Flip-Flop, eine Selbsthaltelogik und einen Verzögerer.

## Revendications

1. Procédé de synchronisation de données pour un système de commande distribué d'une centrale nucléaire, le procédé comprenant :
après reprise sur défaillance de l'une quelconque des stations de commande, le verrouillage d'une sortie d'une station de commande défaillante dans le système de commande distribué de la centrale nucléaire pour permettre à la station de commande défaillante d'être dans un état de contournement, où le système de commande distribué de la centrale nucléaire comprend une pluralité de stations de commande configurées pour une redondance parallèle (S110) ; et le procédé étant **caractérisé en ce qu'**il comprend en outre :
la comparaison d'une variable de la station de commande défaillante avec une variable d'une station de commande sélectionnée fonctionnant normalement pour déterminer des données à synchroniser (S120) ; et l'établissement d'un canal de transmission de données avec la station de commande défaillante, et l'exécution d'une synchronisation de données sur des données à synchroniser sur la base du canal de transmission de données établi (S130) ;
la comparaison de la variable de la station de commande défaillante avec la variable de la station de commande sélectionnée fonctionnant normalement pour déterminer des données à synchroniser comprend :
l'acquisition d'une valeur en ligne d'une première variable d'au moins une variable de la station de commande fonctionnant normalement et d'une valeur en ligne d'une deuxième variable d'une variable correspondante de la station de commande défaillante ; et
la détermination des données à synchroniser en comparant la valeur en ligne d'une première variable de chacune d'au moins une variable de la station de commande fonctionnant normalement avec la valeur en ligne d'une deuxième variable d'une variable correspondante de la station de commande défaillante.

2. Procédé selon la revendication 1, **caractérisé en ce que** l'acquisition de la valeur en ligne d'une première variable d'au moins une variable de la station de commande fonctionnant normalement et de la valeur en ligne d'une deuxième variable d'une variable correspondante de la station de commande défaillante comprend :
l'acquisition de la valeur en ligne d'une première variable de chaque variable de la station de commande fonctionnant normalement dans une liste de comparaison de variables visant une variable devant être comparée et de la valeur en ligne d'une deuxième variable d'une variable correspondante de la station de commande défaillante dans la liste de comparaison de variables selon une liste de comparaison de variables.

3. Procédé selon la revendication 1, **caractérisé en ce que**, après qu'une synchronisation de données sur les données à synchroniser est exécutée sur le canal de transmission de données établi entre la station de commande défaillante et une station d'ingénieur, le procédé comprend en outre :
la déconnexion du canal de transmission de données et l'annulation de l'état de contournement dans lequel se trouve la station de commande défaillante.

4. Procédé selon la revendication 2, **caractérisé en ce que**, le procédé comprend en outre :
l'acquisition d'informations de variables de chacune de la pluralité de stations de commande, et l'établissement de la liste de comparaison de variables selon les informations de variables acquises.

5. Procédé selon la revendication 4, **caractérisé en ce que**, les informations de variables comprennent au moins l'un de ce qui suit : un nom de données, un type de données et une valeur en ligne.

6. Procédé selon l'une quelconque des revendications 1 à 5, **caractérisé en ce que**, après reprise sur défaillance de l'une quelconque des stations de commande et avant de contourner une station de commande défaillante dans un système de commande distribué d'une centrale nucléaire, le procédé comprend en outre :
la réalisation d'une définition de variable sur des données devant être synchronisées de chacune de la pluralité de stations de commande.

7. Procédé selon la revendication 6, **caractérisé en ce que** les données devant être synchronisées comprennent au moins l'une des données transmises logiquement suivantes : une bascule RS, une bascule Z, une logique d'auto-maintien et un retardateur.

8. Dispositif de synchronisation de données pour un système de commande distribué d'une centrale nucléaire, le dispositif comprenant :
un module de verrouillage de station de commande (310) utilisé pour verrouiller une sortie d'une station de commande défaillante dans un système de commande distribué de la centrale nucléaire après reprise sur défaillance de l'une quelconque des stations de commande, de sorte que la station de commande défaillante se trouve dans un état de contournement, où le système de commande distribué de la centrale nucléaire comprend une pluralité de stations de commande configurées pour une redondance parallèle ; et le dispositif étant **caractérisé en ce qu'**il comprend en outre :
un module de comparaison de variables (320) utilisé pour comparer une variable d'une station de commande défaillante avec une variable d'une station de commande sélectionnée fonctionnant normalement pour déterminer des données à synchroniser ; et
un module d'établissement de canal et de synchronisation de données (330) utilisé pour établir un canal de transmission de données avec la station de commande défaillante et exécuter une synchronisation de données sur les données à synchroniser sur la base du canal de transmission de données établi ;
le module de comparaison de variables comprend :
une unité d'acquisition de valeur en ligne de variable utilisée pour acquérir une valeur en ligne d'une première variable d'au moins une variable de la station de commande fonctionnant normalement et une valeur en ligne d'une deuxième variable d'une variable correspondante de la station de commande défaillante ; et
une unité de détermination de données de synchronisation utilisée pour déterminer les données à synchroniser en comparant la valeur en ligne d'une première variable de chacune d'au moins une variable de la station de commande fonctionnant normalement avec la valeur en ligne d'une deuxième variable d'une variable correspondante de la station de commande défaillante.

9. Dispositif selon la revendication 8, **caractérisé en ce que** l'unité d'acquisition de valeur en ligne de variable peut fonctionner pour acquérir la valeur en ligne d'une première variable de chaque variable de la station de commande fonctionnant normalement dans une liste de comparaison de variables visant une variable devant être comparée et la valeur en ligne d'une deuxième variable d'une variable correspondante de la station de commande défaillante dans la liste de comparaison de variables selon une liste de comparaison de variables.

10. Dispositif selon la revendication 8, **caractérisé en ce que** le dispositif comprend en outre :
un module de déconnexion de canal et d'annulation de contournement utilisé pour déconnecter le canal de transmission de données et annuler un état de contournement dans lequel se trouve la station de commande défaillante.

11. Dispositif selon la revendication 9, **caractérisé en ce que**, le dispositif comprend en outre :
un module d'établissement de liste utilisé pour acquérir des informations de variables de chacune de la pluralité de stations de commande et établir la liste de comparaison de variables selon les informations de variables acquises.

12. Dispositif selon la revendication 11, **caractérisé en ce que** les informations de variables comprennent au moins l'un de ce qui suit : un nom de données, un type de données et une valeur en ligne.

13. Dispositif selon l'une quelconque des revendications 8 à 12, **caractérisé en ce que**, le dispositif comprend en outre :
un module de définition de variable utilisé pour réaliser une définition de variable sur des données devant être synchronisées de chacune de la pluralité de stations de commande.

14. Dispositif selon la revendication 8, **caractérisé en ce que** les données devant être synchronisées comprennent au moins l'une des données transmises logiquement suivantes : une bascule RS, une bascule Z, une logique d'auto-maintien et un retardateur.
